# EUROPÄISCHE PATENTSCHRIFT

(11) **EP 1 759 568 B1**
(45) Veröffentlichungstag und Bekanntmachung des Hinweises auf die Patenterteilung: **02.01.2008**
(21) Anmeldenummer: 06012587.9
(22) Anmeldetag: 20.06.2006
(51) Int. Cl.: A01C 7/08, A01C 15/00

(54) **Pneumatische Saatgut-und/oder Düngerverteilmaschine**
Pneumatic seed and/or fertilizer distributor
Epandeur pneumatique de graines et/ou engrais

(30) Priorität: 02.09.2005 DE 102005042006
(43) Veröffentlichungstag der Anmeldung: 07.03.2007
(73) Patentinhaber: Kverneland ASA, 4355 Kvernaland (NO)
(72) Erfinder: Schumacher, Ferdinand, 59510 Lippetal - Oestinghausen (DE); Stüttgen, Gerhard, 59510 Lippetal - Nordwald (DE)
(74) Vertreter: Schweiger, Johannes

(56) Entgegenhaltungen:
- EP-A- 0 369 766
- AU-B- 424 836
- DE-A1- 4 315 343
- FR-A- 2 855 934

## Beschreibung

Die Erfindung betrifft eine pneumatische Saatgut- und/oder Düngerverteilmaschine als Anbau und/oder Aufsatteldrillmaschine. Diese besteht aus einem Arbeitsgerät zur Bodenbearbeitung und Ausbringung von Saatgut und/oder Dünger, einem oberhalb des Arbeitsgerätes angeordneten Vorratsbehältnis für Saatgut und/oder Dünger und einer einzigen Dosiereinrichtung zum Dosieren des Saatgutes und/oder Düngers aus dem Vorratsbehältnis zum Arbeitsgerät.

Solche pneumatischen Verteilmaschinen dienen insbesondere der Aussaat von Getreide und anderen Saatgütern und/oder der Ausbringung von Dünger auf dem Ackerboden.

Aus dem Prospekt "Pneumatische Drillmaschinen" von ACCORD aus der Kverneland Group (Art.-Nr. AC 754006, Druckdatum: D01/05) sind Kombinationen aus pneumatischen Verteilmaschinen und Arbeitsgeräten (Bodenbearbeitungsmaschinen) bekannt, bei denen sich das Vorratsbehältnis oberhalb der Bodenbearbeitungsmaschine befindet.

Bekannte Vorratsbehältnisse besitzen meist eine Kontur eines nach unten gerichteten Kegel/oder Pyramidenstumpfes bzw. Trichterform und demnach ist das Volumen des Vorratsbehältnisses etwa in der Mitte der Verteilmaschine angeordnet. Die Dosiereinrichtung befindet sich bei bekannten Verteilmaschinen ebenfalls etwa in der Mitte der Verteilmaschine und demnach etwa mittig über dem Arbeitgerät und ist für die Bedienperson nicht ohne Weiteres erreichbar. Es müssen Hilfsmittel vorgesehen werden, wie beispielsweise eine wegklappbare Treppe, um der Bedienperson das Erreichen der Dosiervorrichtung zu ermöglichen. An der Dosiervorrichtung müssen nämlich Einstellarbeiten vorgenommen werden, um den richtigen Volumenstrom bzw. die richtige Menge des Saatgutes oder Düngers einzustellen. Diese Einstellung ist von einer Vielzahl von Faktoren abhängig und es existieren hierzu Richtwerte.

Solche Saatgutverteilmaschinen sind in der FR-A-2855934, der EP-A-0369766 und der DE 4315343 A1 gezeigt.

Dennoch muss für eine korrekte Einstellung in der Regel auch eine Abdrehprobe vorgenommen werden, um festzustellen, ob der vorgegebene Wert bei dem jeweiligen Saatgut/Dünger zu einem korrekten Ergebnis führt.

Die nach oben offene Ausgestaltung des Vorratsbehältnisses ist auf Grund der unterschiedlichen Befüllungsmethoden durch Säcke, Big Bags oder mittels einer Förderschnecke vorgegeben.

Weiterhin ist aus diesem Grund eine möglichst niedrige Befüllkante des Vorratsbehältnisses wünschenswert, um die Befüllung zu erleichtern. Insbesondere bei großen Feldflächen ist es wünschenswert, möglichst mit einer Füllung des Vorratsbehältnisses eine möglichst große Fläche des gesamten Feldes mit Saatgut/Dünger beschicken zu können, um Weg und Zeit für die Bestellung des Feldes zu optimieren, indem Nebenzeiten wie Fahrten zum Nachfüllen von Saatgut/Dünger minimiert werden.

Je größer das Vorratsbehältnis ist, desto höher ist jedoch das von dem Traktor anzuhebende Gewicht und damit das aufzubringende Hubmoment, da hier der Drei-Punkt-Kraftheber des Traktor zum Einsatz kommt. Je näher der Schwerpunkt des Vorratsbehältnisses in Richtung des Traktors gerückt werden kann, desto geringer ist die vom Traktor aufzuwendende Kraft bzw. das vom Traktor aufzubringende Hubmoment.

Nach Bestellung des Feldes verbleibt in der Regel ein Rest Saatgut/Dünger in dem Vorratsbehältnis und dieser wird über den Sumpf des Vorratsbehältnisses entleert. Dabei muss die Bedienperson wiederum das Arbeitsgerät mit einem Hilfsmittel besteigen. Häufig fällt wertvolles Saatgut/Dünger neben den Entleerbehälter oder dieser wird an den teils scharfen Kanten des Arbeitsgerätes aufgeschlitzt oder anderweitig beschädigt.

Es ist demnach die Aufgabe der vorliegenden Erfindung, eine pneumatische Verteilmaschine vorzugeben, die einerseits eine Gewichtsersparnis zum Ergebnis hat und andererseits leichter bedient und befüllt werden kann.

Grundidee der vorliegenden Erfindung ist es dabei, die Dosiereinrichtung nicht mehr - wie üblich - zentrisch anzuordnen, sondern dezentral in von der Bedienperson erreichbarer Position anzuordnen.

Mit anderen Worten ist bei der erfindungsgemäßen Verteilmaschine das Vorratsbehältnis nicht mehr durch zwei Träger gehalten, sondern das Vorratsbehältnis kann im Bereich des Sumpfes von einem Träger gehalten werden und die Dosiereinrichtung ragt bis zu einer von der Bedienperson von außerhalb des Arbeitsgerätes erreichbaren Position seitlich aus dem Vorratsbehältnis hervor. Durch diese Maßnahme wird nicht nur die Bedienbarkeit der Dosiereinrichtung bei der Mengeneinstellung und der Abdrehprobe wesentlich vereinfacht und beschleunigt, sondern durch die erfindungsgemäße Bauweise kann auch das Gewicht des Vorratsbehältnisses deutlich reduziert werden. Überdies wird durch die Gewichtsersparnis der Druck auf die Hinterachse des Traktors verringert und die schädliche Bodenverdichtung durch die Hinterreifen minimiert sowie die Belastung der Vorderachse verbessert.

Durch die seitliche Anordnung der Dosiereinrichtung kann weiterhin die Höhe des Vorratsbehältnisses bei gleich bleibenden Volumen und der Abstand zum Traktor verringert werden.

In ihrer allgemeinsten Form betrifft die Erfindung daher eine pneumatische Verteilmaschine gemäß Oberbegriff des Anspruchs 1, bei der die Dosiereinrichtung im Bereich der in Fahrtrichtung des Traktors seitlichen Außenkontur des Arbeitsgerätes angeordnet ist.

Das Vorratsbehältnis kann bei der vorliegenden Erfindung in einen Vorratstank und einen Verbindungskanal vom Vorratstank zu der Dosiereinrichtung aufgeteilt sein, wodurch einerseits der Vorratstank trichterförmig gestaltet werden kann und vom Vorratstank über den insbesondere verjüngend ausgeformten Verbindungskanal das Saatgut zu der Dosiereinrichtung geführt wird.

Der Vorratstank kann dabei einen etwa über der vertikalen Mittelachse des Arbeitsgerätes liegenden Schwerpunkt aufweisen und damit sind die Gleichgewichtsverhältnisse der pneumatischen Verteilmaschine größtenteils ausgewogen, so dass das Arbeitsgerät und die pneumatische Verteilmaschine sicher zum und über das Feld gefahren werden können.

Über eine Entleerungseinrichtung, vorzugsweise Entleerungsklappe in dem Verbindungskanal, vorzugsweise im Bereich der Dosiereinrichtung, kann die Bedienperson - ebenfalls ohne auf das Arbeitsgerät steigen zu müssen - das restliche Saatgut aus dem Vorratsbehältnis entleeren.

Damit das Saatgut und/oder der Dünger automatisch zu der Verteileinrichtung gelangen, sind die Seitenwände des Vorratstankes und des Verbindungskanals mindestens 20° gegen die Horizontale, vorzugsweise 30° gegen die Horizontale geneigt, so dass das Saatgut/der Dünger zu der Dosiereinrichtung rutscht.

In einer alternativen Ausgestaltung der Erfindung kann das Vorratsbehältnis mit einem, vorzugsweise waagerechten, Boden ausgestaltet sein, wodurch ein größeres Volumen erreicht wird. In diesem Fall können Förderhilfsmittel in dem Tank vorgesehen sein, um das von der Dosiereinrichtung entfernt gelegene Saatgut zu der Dosiereinrichtung zu befördern.

So kann der Vorratstank beispielsweise kastenförmig ausgestaltet sein, wobei der Träger des Vorratstankes auch durch den Tank hindurch geführt ist. In diesem Fall ist es vorteilhaft, den Träger an seiner Oberseite abzurunden oder keilförmig auszugestalten, so dass das Saatgut/der Dünger nicht auf dem Träger im Tank liegen bleibt.

Der Vorratstank kann in einer alternativen Ausgestaltung auch mit zwei Sümpfen ausgestaltet sein, wobei der ohne Dosiereinrichtung ausgestattete Sumpf über eine Kipp-Bewegung in den anderen Sumpf gekippt werden kann, sobald der Vorratstank nahezu entleert ist.

Das in dem ohne Dosiereinrichtung ausgestatteten Sumpf befindliche Saatgut kann auch durch eine Fördereinrichtung, insbesondere Förderschnecke in den anderen Sumpf transportiert werden.

Weitere Ausgestaltungen der Erfindung ergeben sich aus den Merkmalen der Unteransprüche und im Folgenden wird anhand von Figuren eine Ausgestaltung der Erfindung gezeigt, wobei die Figuren im Einzelnen folgendes darstellen:
- Fig. 1:: eine Rückansicht der erfindungsgemäßen Verteilmaschine mit Arbeitsgerät;
- Fig. 2:: eine Seitenansicht der erfindungsgemäßen Verteilmaschine mit Arbeitsgerät;
- Fig. 3:: eine perspektivische Ansicht des Vorratsbehältnisses mit Dosiereinrichtung;
- Fig. 4:: eine Rückansicht der erfindungsgemäßen Verteilmaschine mit alternativem Vorratsbehältnis.

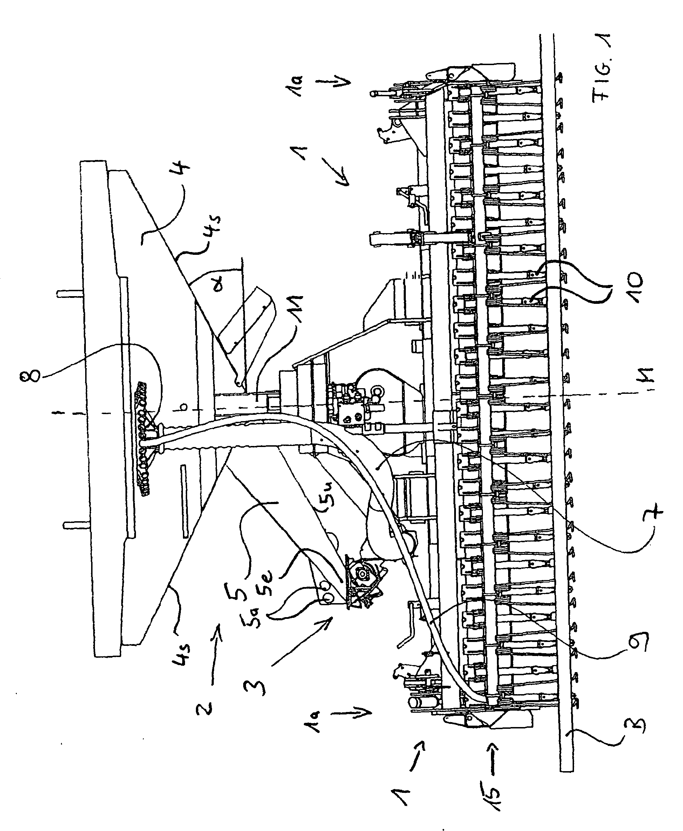

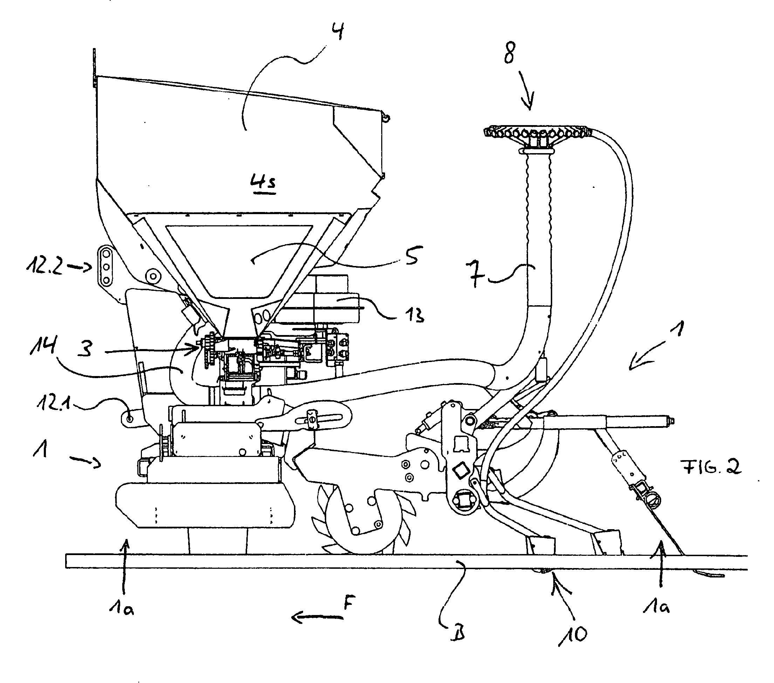

In Fig. 1 ist ein oberhalb eines Arbeitsgerätes 1 angeordnetes Vorratsbehältnis 2 gezeigt, das hier aus einem Vorratstank 4 und einem zu einer Dosiereinrichtung 3 führenden Verbindungskanal 5 besteht. Die Gesamtvorrichtung wird durch einen nicht dargestellten Traktor in die Zeichenebene hinein (Fahrtrichtung F, siehe auch Fig. 2) über den Boden B gezogen, wobei die in dem Vorratstank 4 befindlichen Körner über den Verbindungskanal 5 und eine an dem Ende 5e des Verbindungskanals 5 angeordnete Dosiereinrichtung 3 durch eine Förderleitung 7 zu einer an sich bekannten Verteileinrichtung 8 gefördert werden. Von der Verteileinrichtung 8 führen einzelne Leitungen 9 zu den Säscharen 10 (siehe auch Fig. 2), die für eine gleichmäßige Verteilung des Saatgutes/des Düngers in durch die Säschare 10 erzeugte Furchen im Boden sorgen. Die Verteileinrichtung 8 kann so ausgestaltet sein, dass Teile der Leitungen 9 zur Fahrgassenbildung gesperrt sind und das entsprechende Saatgut zu entsprechenden Anschlüssen 5a in dem Verbindungskanal 5 zurückgeführt wird.

In Bezug auf die Fahrtrichtung F ist das Vorratsbehältnis 2 im Schwerpunkt etwa im Bereich der Mittelachse M des Arbeitsgerätes 1 angebracht und weist eine Trichterform auf, wobei Seitenwände 4s des Vorratstankes 4 in einem Winkel α von mindestens 20° gegen die Horizontale, vorzugsweise mindestens 30° gegen die Horizontale geneigt sind, um ein ausreichendes Gefälle für das Saatgut im Inneren des Vorratstankes 4 vorzusehen.

Eine untere Wand 5u des Verbindungskanals 5, auf der das Saatgut zu der Dosiereinrichtung 3 rutscht, liegt vorzugsweise in gleicher Ebene mit einer der beiden Seitenwände 4s des Vorratstankes 4, so dass das Saatgut ohne Probleme von dem Vorratstank 4 durch den Verbindungskanal 5 zu der Dosiereinrichtung 3 rutschen kann. Der Übergang zwischen dem Vorratstank 4 und dem Verbindungskanal 5 kann aber auch winkelig oder stufig ausgestaltet sein, so dass eine Beschleunigung oder Verlangsamung des Saatguts an dieser Stelle erreicht wird.

Insgesamt weist das Vorratsbehältnis 2 eine Y-Form auf.

Das Arbeitsgerät 1 stellt meist ein komplexes Gebilde aus verschiedenen Bauteilen dar und ist demnach für die Bedienperson nicht ohne entsprechende Hilfsmittel zu betreten. Das Arbeitsgerät 1 hat in der Aufsicht eine im Wesentlichen quadratische Außenkontur, die in Fig. 1 und 2 mit den Bezugszeichen 1a gekennzeichnet ist.

Indem die Dosiereinrichtung 3 durch die y-förmige Ausgestaltung des Vorratsbehältnisses 2 in den Bereich der Außenkontur 1a des Arbeitsgerätes 1 ragt, kann der Bediener der Dosiereinrichtung 3 von einer Position neben dem Arbeitsgerät 1 (auf dem Boden stehend) Einstellungen an der Dosiereinrichtung 3 vornehmen und die Abdrehprobe durchführen.

In Fig. 2 ist weiterhin ein Gebläse 13 dargestellt, das über eine Gebläseleitung 14 aus der Dosiereinrichtung fallendes Saatgut/Dünger über die Förderleitung 7 zu der Verteileinrichtung 8 fördert.

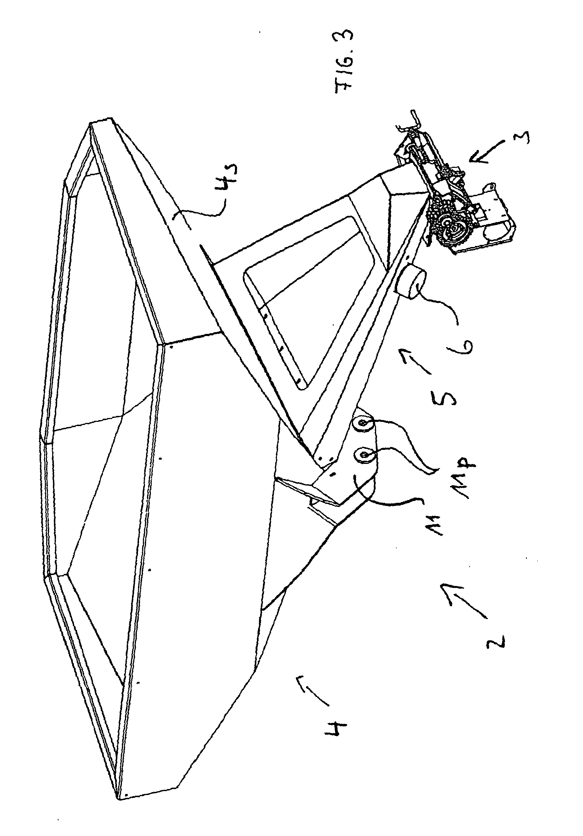

In Fig. 3 ist der Befestigungsträger 11 des Vorratsbehältnisses 2 deutlich zu erkennen, wobei der Befestigungsträger an zwei Befestigungspunkten 11p am Rahmen des Arbeitsgerätes 1 befestigt wird. Das Arbeitsgerät 1 mit angebauter Scharschiene 15 wird zusammen mit dem Vorratsbehältnis 2 und der Dosiereinrichtung 3 durch übliche Befestigungsmittel, nämlich über einen an sich bekannten 3-Punkt-Kraftheber an dem Traktor angebracht. Die Befestigungsmittel bestehen verteilmaschinenenseitig aus zwei unteren Koppelpunkten 12.1 und einem oberen Koppelpunkt 12.2.

Nach Abschluss des Sävorganges kann über eine Entleerungseinrichtung 6 das in dem Vorratsbehältnis 2 verbliebene Saatgut entleert werden.

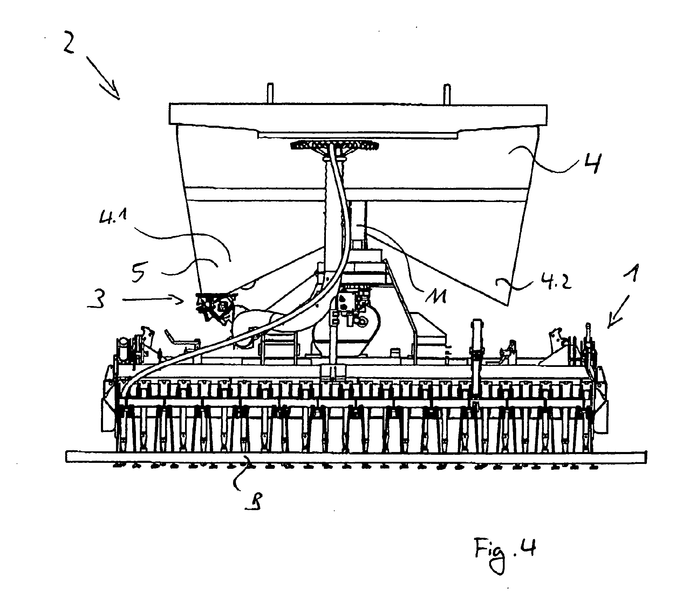

Fig. 4 zeigt eine alternative Ausgestaltung des Vorratstanks 4, in welchem der Verbindungskanal 5 integriert ist. Um das Volumen des Vorratstanks zu vergrößern und eine gleichmäßige Gewichtsverteilung zu erreichen, weist der Vorratstank 4 zwei Sümpfe 4.1 und 4.2 auf, wobei der Sumpf 4.1 in den Verbindungskanal 5 übergeht und das in Sumpf 4.2 befindliche Saatgut entweder mittels einer Förderschnecke (nicht dargestellt) in den Sumpf 4.1 befördert wird, sobald der Füllstand des Saatgutes in Sumpf 4.1 ein bestimmtes Niveau unterschreitet. Alternativ zu der Förderschnecke kann der Vorratstank 4 zweigeteilt ausgestaltet sein mit einem Drehpunkt im Bereich des Befestigungsträgers 11 und die Überführung des Saatgutes im Sumpf 4.2 erfolgt durch eine Kipp-Bewegung des Sumpfes 4.2 in den Sumpf 4.1.

### Pneumatische Saatgut- und/oder Düngerverteilmaschine

### Bezugszeichenliste

- 1: Arbeitsgerät
- 1a: Außenkontur
- 2: Vorratsbehältnis
- 3: Dosiereinrichtung
- 4: Vorratstank
- 4.1: Sumpf
- 4.2: Sumpf
- 4s: Seitenwände
- 5: Verbindungskanal
- 5a: Anschlüsse
- 5e: Ende des Verbindungskanals
- 5u: untere Wand
- 6: Entleerungseinrichtung
- 7: Förderleitung
- 8: Verteileinrichtung
- 9: Säleitung
- 10: Säschar
- 11: Befestigungsträger
- 11p: Befestigungspunkt
- 12.1: Untere Koppelpunkte
- 12.2: Oberer Koppelpunkt
- 13: Gebläse
- 14: Gebläseleitung
- 15: Scharschiene
- M: vertikale Mittelachse
- B: Boden
- α: Gefälle

## Patentansprüche

1. Pneumatische Saatgut- und/oder Düngerverteilmaschine als Anbau- und/oder Aufsatteldrillmaschine zur Anbringung an eine Zugmaschine, bestehend aus einem Arbeitsgerät (1) zur Ausbringung von Saatgut und/oder Dünger, einem oberhalb des Arbeitsgerätes (1) angeordneten Vorratsbehältnis (2) für Saatgut und/oder Dünger und einer einzigen Dosiereinrichtung (3) zum Dosieren des Saatgutes und/oder Düngers aus dem Vorratsbehältnis (2) zum Arbeitsgerät (1), **dadurch gekennzeichnet, dass** die Dosiereinrichtung (3) im Bereich der in Fahrtrichtung der Zugmaschine seitlichen Außenkontur (1a) des Arbeitsgerätes (1) angeordnet ist.

2. Pneumatische Verteilmaschine nach Anspruch 1, **dadurch gekennzeichnet, dass** die Dosiereinrichtung (3) zumindest teilweise oberhalb des Arbeitsgerätes (1) angeordnet ist.

3. Pneumatische Verteilmaschine nach einem der vorhergehenden Ansprüche, **dadurch gekennzeichnet, dass** die Dosiereinrichtung (3) zwischen dem Vorratsbehältnis (2) und dem Arbeitsgerät (1) angeordnet ist.

4. Pneumatische Verteilmaschine nach einem der vorhergehenden Ansprüche, **dadurch gekennzeichnet, dass** die Dosiereinrichtung (3) vollständig innerhalb der in vertikaler Richtung verlängerten seitlichen Außenkontur (1a) des Arbeitsgerätes (1) angeordnet ist.

5. Pneumatische Verteilmaschine nach einem der vorhergehenden Ansprüche, **dadurch gekennzeichnet, dass** das Vorratsbehältnis (2) einen Vorratstank (4) mit einem etwa über der vertikalen Mittelachse M des Arbeitsgerätes (1) liegenden Schwerpunkt aufweist.

6. Pneumatische Verteilmaschine nach einem der vorhergehenden Ansprüche, **dadurch gekennzeichnet, dass** das Vorratsbehältnis (2) einen an dem Vorratstank (4) und der Dosiereinrichtung (3) angeschlossenen, insbesondere zur Dosiereinrichtung (3) verjüngend ausgeformten, Verbindungskanal (5) aufweist.

7. Pneumatische Verteilmaschine nach einem der vorhergehenden Ansprüche, **dadurch gekennzeichnet, dass** der Verbindungskanal (5) eine im Bereich der Dosiereinrichtung (3) angebrachte Entleerungseinrichtung (6) zur Entleerung des Vorratsbehältnisses (2) aufweist.

8. Pneumatische Verteilmaschine nach einem der vorhergehenden Ansprüche, **dadurch gekennzeichnet, dass** der Vorratstank (4) zum Verbindungskanal (5) hin verjüngend ausgeformt ist, wobei Seitenwände (4s) des Vorratstankes (4) ein Gefälle α von mindestens 20° gegen die Horizontale, vorzugsweise mindestens 30° gegen die Horizontale aufweisen.

9. Pneumatische Verteilmaschine nach einem der Ansprüche 1 bis 7, **dadurch gekennzeichnet, dass** der Vorratstank (4) mit einer Fördereinrichtung, insbesondere Förderschnecke zur Beförderung des Saatgutes und/oder Düngers zu der Dosiereinrichtung (3) ausgestattet ist.

10. Pneumatische Verteilmaschine nach Anspruch 9, **dadurch gekennzeichnet, dass** der Verbindungskanal (5) in den Vorratstank (4) integriert ist.

11. Pneumatische Verteilmaschine nach einem der Ansprüche 9 oder 10, **dadurch gekennzeichnet, dass** der Vorratstank (4) zwei Sümpfe (4.1, 4.2) aufweist, wovon der eine Sumpf (4.1) den Verbindungskanal (5) bildet und der andere Sumpf (4.2) die Fördereinrichtung aufnimmt.

12. Pneumatische Verteilmaschine nach einem der Ansprüche 1 bis 7, **dadurch gekennzeichnet, dass** der Vorratstank (4) einen waagerechten Boden aufweist.

13. Pneumatische Verteilmaschine nach einem der Ansprüche 9 oder 11, **dadurch gekennzeichnet, dass** die Fördereinrichtung intermittierend angetrieben wird.

14. Pneumatische Verteilmaschine nach einem der Ansprüche 1 bis 7 oder 10, **dadurch gekennzeichnet, dass** der Vorratstank (4) zwei Sümpfe (4.1, 4.2) aufweist, wovon der eine Sumpf (4.1) den Verbindungskanal (5) bildet und der Inhalt des anderen Sumpfes (4.2) um eine zwischen den beiden Sümpfen (4.1, 4.2) befindliche Kippachse in den Verbindungskanal (5) kippbar ist.

## Claims

1. Pneumatic seed and/or fertiliser distributor as a mounted and/or semimounted drill for fitting to a tractor, consisting of a working implement (1) for applying seeds and/or fertiliser, a storage container (2), which is disposed above the working implement (1), for seeds and/or fertiliser and a single metering device (3) for metering the seeds and/or fertiliser from the storage container (2) to the working implement (1), **characterised in that** the metering device (3) is disposed in the region of the outer contour (1a) of the working implement (1) which is at the side in the direction of travel of the tractor.

2. Pneumatic distributor according to Claim 1, **characterised in that** the metering device (3) is disposed at least partly above the working implement (1).

3. Pneumatic distributor according to either of the preceding Claims, **characterised in that** the metering device (3) is disposed between the storage container (2) and the working implement (1).

4. Pneumatic distributor according to any one of the preceding Claims, **characterised in that** the metering device (3) is disposed completely within the lateral outer contour (1a), which is lengthened in the vertical direction, of the working implement (1).

5. Pneumatic distributor according to any one of the preceding Claims, **characterised in that** the storage container (2) comprises a storage tank (4) with a centre of gravity which lies approximately above the vertical centre axis M of the working implement (1).

6. Pneumatic distributor according to any one of the preceding Claims, **characterised in that** the storage container (2) comprises a connecting channel (5) which is connected to the storage tank (4) and the metering device (3) and which is in particular shaped in a tapering manner towards the metering device (3).

7. Pneumatic distributor according to any one of the preceding Claims, **characterised in that** the connecting channel (5) comprises a discharge device (6), which is fitted in the region of the metering device (3), for emptying the storage container (2).

8. Pneumatic distributor according to any one of the preceding Claims, **characterised in that** the storage tank (4) is shaped in a tapering manner towards the connecting channel (5), wherein side walls (4s) of the storage tank (4) have a slope α of at least 20° towards the horizontal, preferably at least 30° towards the horizontal.

9. Pneumatic distributor according to any one of Claims 1 to 7, **characterised in that** the storage tank (4) is provided with a delivery device, in particular a worm conveyor, for delivering the seeds and/or fertiliser to the metering device (3).

10. Pneumatic distributor according to Claim 9, **characterised in that** the connecting channel (5) is integrated into the storage tank (4).

11. Pneumatic distributor according to either of Claims 9 and 10, **characterised in that** the storage tank (4) comprises two sumps (4.1, 4.2), of which one sump (4.1) forms the connecting channel (5) and the other sump (4.2) accommodates the delivery device.

12. Pneumatic distributor according to any one of Claims 1 to 7, **characterised in that** the storage tank (4) comprises a horizontal floor.

13. Pneumatic distributor according to either of Claims 9 and 11, **characterised in that** the delivery device is driven intermittently.

14. Pneumatic distributor according to any one of Claims 1 to 7 or 10, **characterised in that** the storage tank (4) comprises two sumps (4.1, 4.2), of which one sump (4.1) forms the connecting channel (5) and the content of the other sump (4.2) can be tipped about a tipping axis into the connecting channel (5).

## Revendications

1. Machine pneumatique de distribution de semence et/ou d'engrais sous forme de semoir porté et/ou de semoir semi-porté et destinée à être attaché à un tracteur, comprenant un appareil de travail (1) pour la distribution de semence et/ou d'engrais, un récipient de stockage (2) disposé au-dessus de l'appareil de travail (1) pour la semence et/ou l'engrais et un dispositif de dosage (3) unique pour le dosage de la semence et/ou de l'engrais provenant du récipient de stockage (2) pour l'appareil de travail (1), **caractérisée en ce que** le dispositif de dosage (3) est disposé dans la zone du contour extérieur (1a) latéral, vu dans le sens de marche du tracteur, de l'appareil de travail (1).

2. Machine de répartition pneumatique selon la revendication 1, **caractérisée en ce que** le dispositif de dosage (3) est disposé au moins en partie au-dessous de l'appareil de travail (1).

3. Machine de répartition pneumatique selon l'une quelconque des revendications précédentes, **caractérisée en ce que** le dispositif de dosage (3) est disposé entre le récipient de stockage (2) et l'appareil de travail (1).

4. Machine de répartition pneumatique selon l'une quelconque des revendications précédentes, **caractérisée en ce que** le dispositif de dosage (3) est disposé complètement à l'intérieur du contour extérieur (1a) latéral, prolongé dans le sens vertical, de l'appareil de travail (1).

5. Machine de répartition pneumatique selon l'une quelconque des revendications précédentes, **caractérisée en ce que** le récipient de stockage (2) présente un réservoir de stockage (4) avec un centre de gravité situé à peu près au-dessus de l'axe médian M vertical de l'appareil de travail (1).

6. Machine de répartition pneumatique selon l'une quelconque des revendications précédentes, **caractérisée en ce que** le récipient de stockage (2) présente un canal de liaison (5) raccordé au réservoir de stockage (4) et au dispositif de dosage (3), en particulier formé en se rétrécissant vers le dispositif de dosage (3).

7. Machine de répartition pneumatique selon l'une quelconque des revendications précédentes, **caractérisée en ce que** le canal de liaison (5) présente un dispositif de vidage (6) placé au niveau du dispositif de dosage (3) pour le vidage du récipient de stockage (2).

8. Machine de répartition pneumatique selon l'une quelconque des revendications précédentes, **caractérisée en ce que** le réservoir de stockage (4) est formé en se rétrécissant en direction du canal de liaison (5), des parois latérales (4s) du réservoir de stockage (4) présentant une pente α d'au moins 20 ° par rapport à l'horizontale, de préférence au moins 30 ° par rapport à l'horizontale.

9. Machine de répartition pneumatique selon l'une quelconque des revendications 1 à 7, **caractérisée en ce que** le réservoir de stockage (4) est équipé d'un dispositif de transport, en particulier une vis sans fin de transport pour le transport de la semence et/ou de l'engrais au dispositif de dosage (3).

10. Machine de répartition pneumatique selon la revendication 9, **caractérisée en ce que** le canal de liaison (5) est intégré dans le réservoir de stockage (4).

11. Machine de répartition pneumatique selon l'une quelconque des revendications 9 ou 10, **caractérisée en ce que** le réservoir de stockage (4) présente deux soubassements (4.1, 4.2), dont l'un (4.1) forme le canal de liaison (5) et l'autre (4.2) reçoit le dispositif de transport.

12. Machine de distribution pneumatique selon l'une quelconque des revendications 1 à 7, **caractérisée en ce que** le réservoir de stockage (4) présente un fond horizontal.

13. Machine de répartition pneumatique selon l'une quelconque des revendications 9 ou 11, **caractérisée en ce que** le dispositif de transport est entraîné par intermittence.

14. Machine de distribution pneumatique selon l'une quelconque des revendications 1 à 7 ou 10, **caractérisée en ce que** le réservoir de stockage (4) présente deux soubassements (4.1, 4.2), dont l'un (4.1) forme le canal de liaison (5) et le contenu de l'autre soubassement (4.2) peut basculer dans le canal de liaison (5) autour d'un axe de basculement se trouvant entre les deux soubassements (4.1, 4.2).
